# EUROPEAN PATENT APPLICATION

(11) **EP 4 292 446 A1**
(43) Date of publication of application: **20.12.2023**
(21) Application number: 22752384.2
(22) Date of filing: 09.02.2022
(51) Int. Cl.: A23N 1/00, B08B 3/02, A47J 19/02

(54) **JUICING MACHINE WITH SANITISING SYSTEM AND METHOD**

(30) Priority: 10.02.2021 ES 202130105
(71) Applicant: Zumex Group, S.A., 46113 Moncada (ES)
(72) Inventor: GONZÁLEZ RUIZ, Jose Alberto, 46113 Moncada (Valencia) (ES); CARRASCOSA RUBIO, Carlos, 46113 Moncada (Valencia) (ES); ASENSIO CAMACHO, Ramón, 46113 Moncada (Valencia) (ES); MILLA BELTRÁN, Sara, 46113 Moncada (Valencia) (ES)
(74) Representative: Soler Lerma, Santiago
(86) International application number: PCT/ES2022/070065
(87) International publication number: WO 2022/171921

(57) **Abstract**

The patent relates to a squeezing machine comprising a juice extraction unit housed in a casing and incorporating elements for an automated sanitization of the juice extraction unit and of the environment in which the squeezing occurs, the juice is stored and served, and method for sanitising a squeezing machine.

## Description

The patent relates to a juice extraction machine comprising a juice extraction unit housed in a casing and incorporating elements for an automated sanitisation of the juice extraction unit and of the environment in which the juice is produced, stored and served.

In particular the invention is especially directed at juice extraction machines in which, during the squeezing process, a solid residue is generated which must be brought, hygienically, to an external waste zone arranged outside the casing.

It is advantageous, in order to avoid management problems and facilitate reuse, that the fruit remains are as dry as possible and its treatment is independent of other residues such as washing water or other liquids such as juice.

That is why the present invention will be applied to machines comprising an extraction system in which there is a removal of solid waste independent of the drain or drains that it can incorporate.

The technical field to which the invention belongs is that automatice juice extraction machines.

### BACKGROUND

There is a history of squeezing machines comprising a squeezing unit with a rind extraction system.

Examples of such machines are found in the patent literature:
The utility model ES1240714U of the same applicant adds a functionality to the machines of the type referred to herein in the same way as the use model ES 1099708 U also of the same applicant adds another use.

Also patent ES2567101, of the same applicant, incorporates modifications on a machine of the type of which we refer.

Cleaning machines has always been a problem because, when it comes to preparing a beverage that is not treated (does not go through fermentation or pasteurization processes for example) but is drunk raw, maximum hygiene is required.

In the patent literature we find machines that produce juice but do not sanitise. Sanitisation processes require the use of heat and products to eliminate bacteria.

Heating the water from room temperature to a temperature valid for sanitisation is an expensive process in terms of energy use so it is preferable to conserve heat by recirculating the cleaning liquid once heated.

The recirculation requires having a recirculation circuit and a watertight container. The difficulty, in the type of machine concerned, is that said watertight container must have openings for the entry of fruits, the exit of solids and, in addition, house a squeezing unit connected to a motor by shafts.

Alternatively, systems have been developed that, instead of providing the machine with everything necessary to carry out the sanitisation tasks, facilitate the disassembly of the squeezing groups for washing elsewhere. An example of these patents is the following.

In patent ES2567101 the squeezing unit has its different elements interconnected and with easy access to the driving machine, so that its disassembly and handling is carried out quickly.

The patent ES2643766 has as its object a support that allows to manipulate the squeezing unit as a block, facilitating the assembly and disassembly operations.

Another example is patent US2012024172 relating to a structure for keeping the squeezing unit attached to a squeezing machine and that, once said structure is removed, the squeezing unit is easy to disassemble for cleaning.

However, it is not only the squeezing unit that requires cleaning, but the casing itself since during squeezing splashes occur that slip through the walls of the casing and fall into the juice storage tray.

All elements that may come into contact with the juice should be sanitised.

There is evidence of beverage preparation machines that incorporate washing systems that comprise water cleaning.

Examples of this are the following:
Patent US9155330 relates to a machine for preparing beverages wherein a food selected by the user from among predetermined ones, falls into a blender together with a liquid and there the shake is prepared. That blender is then rinsed with water, all automatically. There is no sanitisation process nor are the characteristics and needs of the machine the same as in the case of squeezing.
Patent CN108835640 relates to a pulping machine, which grinds the fruit homogeneously. After crushing, water jets clean the area of operations. This machine does not present any solids outlet since all the waste is crushed so it is poured by drainage together with the cleaning water. This option makes it impossible to take advantage of the inedible remains of the fruits. There is no sanitisation process and the needs of the machine are not the same as in the case of squeezing.
The patents ES2130077 and ES20116143 have as their object juicing machines in which the solid waste is crushed to be able to drain it along with the cleaning water, all with the aforementioned problems.
Patent ES2158162 relates to a squeezer in which a series of spraying points are arranged to clean particular areas thereof, but there is no generalized sanitisation of the squeezing area, the squeezing unit and all its auxiliary elements.
Patent CN108968087 relates to a squeezing machine that has waste outlets through which the orange peels are evacuated. These outlets also act as an overflow in case of overfilling of the tank, acting as a drain of both juice and water. This machine is not watertight, does not allow recirculation, and therefore no temperature is applied to the water, and the water jets are directed to certain elements of the squeezing unit, and not for general cleaning. In this machine there is not a complete sanitisation but a rinsing of some elements. However, despite being a rinse with a very reduced and directed use of water, when draining through the same rind outlet ducts, the management of the waste is difficult and does not respect the environment.

All this shows a need not yet covered, which is the possibility of sanitising all the elements of an automatic juicing machine that can come into contact with the juice, all this allowing the exit of waste without mixing the solids and liquids, allowing easier management of the waste as well as, where appropriate, the use of the solids without overloading the sewerage systems.

A difficult element to clean is the juice filter which can also be housed inside the casing.

For example, we find that application ES2545235 relates to a squeezing machine that incorporates a filter with a sweeper that removes the remains of pulp and seeds.

Use model ES1045339U also relates to a filter for a squeezing machine with an trawling system for the removal of pulp and other debris that remains deposited on the filter.

The applicant themselves hold a series of records related to filters that incorporate self-cleaning elements, serving as an example the use model ES1238000U and ES1217438U among others.

None of the aforementioned filter systems is optimal because, due to their configuration, they generate or can generate shaded areas or recesses that are difficult to clean.

### DESCRIPTION OF THE INVENTION

The invention solves the above problems and claims a squeezing machine capable of carrying out an automated and complete sanitising process, all the elements that can come into contact with the juice including the casing being sanitised.

The machine separates the solid waste without mixing it with liquids, facilitating its management and takes it to a bucket of waste outside the housing to promote hygiene.

The invention also includes the sanitising method applicable with the proposed machine and which optimizes the process.

For this purpose, the machine comprises:
- A watertight housing, defined by a series of walls having a series of holes suitable for;
   - The housing of the shafts that transmit the movement from the motor to the moving elements of the squeezing unit or its accessories.
   - The introduction of the fruits to be squeezed.
   - The exit of solid waste.
   - The entry and exit of cleaning liquids; inlet of water from the intake, outlet of cleaning liquids for recirculation, inlet of recirculated cleaning liquids, outlet, the definitive outlet to drain of cleaning liquids.
      The term *water* shall refer exclusively to water directly taken from the water intake and *cleaning liquids* shall be the generic way of referring to any liquid, including water, involved in cleaning and sanitation operations.
- A squeezing unit housed inside the casing and which, in a preferred embodiment comprises at least one male drum and one female drum and accessory elements such as vane, rind extractor, juice filter and juice storage bowl with an outlet pipe.
- A cleaning circuit comprising at least two sub-circuits and in a preferred embodiment comprises three sub-circuits:
   - The first sub-circuit that feeds water to the machine preferably from a mains water collection point.
   - The second sub-circuit generally recirculates the cleaning liquids of the casing.
   - The third sub-circuit recirculates the cleaning liquids from the tub, recirculating them through the pipe towards the housing.

The aforementioned casing comprises, in addition to the holes connected to the cleaning circuit, a series of holes suitable to allow the entry of fruit to be squeezed and the exit of the waste. These holes can be sealed for cleaning processes or during machine downtimes, causing the inside of the housing to be completely isolated from the outside and sealed.

In a possible embodiment, the geometry of the housing comprises two differentiated volumes, the upper one being larger, with a funnel-shaped expansion space between them. All the volumes of the housing are internally communicated.

This casing, suitable for containing the squeezing unit, its accessories and the sprinklers of a sanitising system comprises;
- A rear wall intended to be anchored directly to the body of the machine where the motor and other elements are located. This rear wall comprises housings for the drive shafts of the squeezing unit, a housing for fixing the blade and, optionally, a housing for the drive shaft of the filter cleaning system.
- Two side walls where, preferably, the waste outlet holes associated with doors that close or open them are arranged. Also preferably on the top of one of the sides is the feeding window through which the fruit is introduced into the casing. This window is associated with a lid that closes and opens it. In a possible embodiment, the side walls comprise a section inclined towards the interior of the casing being in that section where the waste outlet holes could be located.
- A front wall with at least one hole for the outlet pipe and, in a preferred embodiment with, in addition, a hole for the recirculation pipe.
- An upper lid with holes for the entry of cleaning liquids.
- A bottom closure with a hole to accommodate a drain.
- Joining elements between the different walls, the upper lid and the lower closure.
- Attachment elements to the body of the machine.

In a preferred embodiment the walls, the lid and the lower closure are permanently joined either by welding, screws or any other means, although in other embodiments the joints of the walls with each other and with the closures could be removable.

An execution with inclined sections on the sides and with waste outlet holes in those sections presents different advantages; the waste easily falls through the holes to a waste bucket outside the casing, a funnel shape is generated that facilitates all the liquid to slide towards the bottom of the casing, and in addition a cut-out or setback is generated in the silhouette of the casing in such a way that the size of its bottom is reduced and a space is generated to locate the closing doors of outlet holes and allow their movement without exceeding the maximum width of the machine.

However, the inclined planes and the holes arranged in them are an embodiment option, there being others in which these inclined planes do not exist or even in which the waste outlet holes are not found in the side walls.

The front wall has a viable area. It is understood as viable because this area can be moved or removed leaving free access to the interior of the housing.

In a preferred embodiment, the front wall has a fixed part and another viable part. The fixed part is located in the lower area of the case and covers up to the top of the expansion area. This fixed part, together with the walls and the bottom closure, generates a tank suitable for housing the cleaning liquids before they are recirculated.

At said bottom of the front wall there is a hole for the outlet pipe through which the basin will drain. In a preferred embodiment, there is another hole for the return of cleaning liquids to the inside of the casing during a washing cycle. The upper part of the front wall is preferably viable to allow wide and comfortable access to the interior of the casing and has a transparent window.

In a preferred embodiment, the fruit inlet hole is arranged at the top of a side wall and is associated with a sliding lid which opens to let the fruit pass into the casing during squeezing and closes during cleaning preventing the water from leaving the casing. In a preferred option it also remains closed during the machine downtimes. Preferably the door has upward and downward movement and is mechanical and automated and the closing and opening mechanism is coordinated with the squeezing, washing or stopping cycles.

The waste exit holes are each associated with a door. This door remains open during squeezing and closed during cleaning. In a preferred embodiment it also remains closed during machine downtimes. The movement of these doors can be mechanised and automated or done manually. If it is mechanical and automated, the closing and opening mechanism is coordinated with the squeezing, washing or stopping cycles.

The squeezing unit and its accessories are arranged as follows.

The squeezing unit is located in a plane higher than the waste outlet holes and has extractor wedges to detach the rind of the already squeezed fruit, causing it to fall through the waste outlet holes to a container outside the casing.

In a preferred embodiment a juice filter is also arranged inside the casing with a trawl cleaning system. That juice filter is located downstream, preferably in the vertical below the squeezing unit. The pulp and remains deposited in the juice filter are dragged to their ends and from there, through the waste exit holes, they fall into a waste bucket outside the casing.

In a preferred embodiment the juice filter is in the form of a double channel in parallel and in each of the channels a spindle is housed, rotating opposite each other, in such a way that each one of them displaces the waste by one of the ends of the juice filter. The spindles move along a shaft associated with the motor and a gear reverses the gear of one of them.

The machine is completed with the cleaning sub-circuits which, in a preferred embodiment, are three although in another possible embodiment there may be only two.

The first sub-circuit introduces the water into the machine through sprinklers. This sub-circuit comprises a flow regulator that acts associated with a level detector in such a way that once there is sufficient water inside the casing, the water supply from the intake is stopped. The water is introduced into the machine through the first conduit using sprinklers. The sprinklers comprise vanes with nozzles preferably orientated diagonally which causes rotation and also directs the water towards the inner walls of the housing. The water introduced accumulates in a tank formed at the bottom of the housing waiting for its recirculation.

The second sub-circuit comprises a drain suitable for extracting the cleaning liquids from the tank at the bottom of the casing and starting the recirculation. This second sub-circuit comprises a branch capable of determining which liquid will be definitively drained and which one will be recirculated and, in addition, a recirculation pump pressurising the cleaning liquids, a heater such as a flow heater, a water temperature controller such as a thermostat. It may optionally comprise a filter. At the end of this second sub-circuit, cleaning liquids re-enter the housing through the second sprinkler line.

In a preferred embodiment the sprinklers comprise a first and a second conduit and are associated to the first sub-circuit by the first conduit and to the second sub-circuit by the second conduit in such a way that in the washing cycle, the initial filling occurs through the first conduit of the sprinklers with water from the mains outlet and in the recirculation, the cleaning liquids enter the casing through the second conduit of the sprinklers.

The sprinklers may have a different configuration although the one explained with a first and a second line is the preferred one.

Within that preferred embodiment, the sprinklers comprise a series of vanes with outlet nozzles for the cleaning liquids. Some of the nozzles are in the first conduit and others in the second. Preferably, those of the first conduit are of smaller section than those of the second conduit and that to raise the pressure to the water arriving from the mains outlet.

Associated with the first or second sub-circuit are the deposits of cleaning products, suitable for introducing into the flow both detergents, surfactants, descalers or any other product that is necessary or suitable for proper sanitation.

The drainage is common both for the recirculation and for the final drainage of the casing, up to the branch where the liquids are diverted to recirculation or sewerage depending on the time in the washing cycle.

The third sub-circuit recirculates the cleaning liquids from the basin, withdrawing them from the basin, passing them through the outlet pipe and recirculating them through the recirculation pipe to introduce them into the housing. For this purpose it comprises an outlet pipe of the basin, a stepper motor arranged in the passage between the basin and the outlet pipe, and a recirculation pipe arranged under the outlet pipe.

During the squeezing cycles the recirculation pipe is in an open, delayed position, leaving the mouth of the outlet pipe free allowing, the juice to exit and, during the washing cycles, it is in a closed, advanced position, and collects the cleaning liquid that exits the outlet pipe and reintroduces it into the casing at the bottom.

The control of the amount of liquid exiting the basin, either juice or cleaning liquid exiting, and its pumping is performed by a stepper motor arranged between the basin and the outlet pipe.

The device, as described above, allows the execution of a washing procedure that improves the results and comprises the following steps and sub-steps.

A zero stage of removal of chunks and debris. At this stage the squeezing unit and the spindles of the juice filter move to evacuate all the remains of fruit or pulp that may remain. At this stage the entry of new fruit is no longer allowed.

A first step of closing covers and doors, positioning the recirculation pipe in the closed position, in such a way as to collect the cleaning liquid that exits the outlet pipe and reintroduces it into the casing and verification of all the above preventing the passage to the subsequent step until the verification is completed.

A second stage in which water is introduced into the casing. In this second stage, the pressure of the water in the mains outlet is increased by conducting it through the first conduit because the vanes of the sprinklers associated with that first conduit have a smaller section than that of the conduit that carries the water to them. The water exits the nozzles under pressure and with jets also directed towards the inner walls of the housing by the action of the rotating vanes.

In this first step a rinse is performed by removing the juice residues, since the detergent would be neutralised by the acids of the juice in case of being fermented in this first phase, greater amounts of detergent being required for the same result.

Once there is enough water inside the casing, accumulated in the tank formed at the bottom, the level detector orders the water intake to be closed.

The third stage is that of recirculation and two sub-steps take place that can be simultaneous:
- The general recirculation sub-step wherein water or cleaning liquids exit the housing through the drain and pass through a filter, a pump and a heater to re-enter the housing, under pressure by action of the pump, and through the second conduit of the sprinklers.
- The partial recirculation sub-step wherein the liquid contained in the basin exits the outlet pipe and re-enters the housing through the recirculation tube.

During the first phase of this third stage, the water is recirculated, passing through a heater until it reaches a predetermined temperature that can vary according to the type of detergent to be used or other variables.

Once the predetermined temperature has been reached, the detergent is introduced into the flow rate preferably through a metering pump that connects through a channel at the base of the vanes. This cleaning liquid, comprising water and detergent, is recirculated until the completion of this third step.

A fourth emptying step, in which the cleaning liquids evacuate through the drain and, at the branch, are directed to the sewer. Optionally, before being directed to drain, they can pass through the filter.

Optionally there may be a fifth stage of rinsing and, where appropriate, polishing.

During the cleaning process and as part of it, the squeezing unit and its accessories move. This movement is suitable to facilitate access of water and cleaning products to all parts of the system.

This movement may be continuous or have predetermined or random stops.

### BRIEF DESCRIPTION OF THE FIGURES

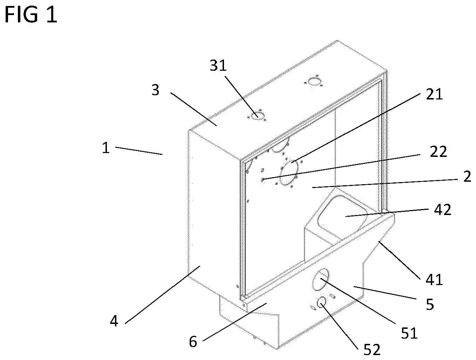

FIGURE 1 shows the casing (1) where the rear wall (2) can be seen with the housings (21) for the drive shafts of the squeezing system and the blade anchors (22), the upper lid (3) with the holes for the channelling of cleaning liquids (31), the side walls (4), in this embodiment with an inclined section (41) where the waste outlet holes (42) have been arranged, the front part (5), closed up to the expansion zone (6), this front part has a liquid outlet hole (51) and a recirculation hole (52).

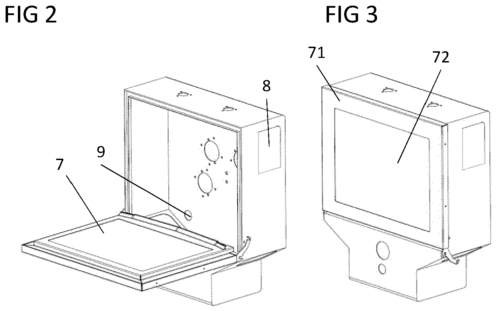

FIGURE 2 shows the housing to which a viable zone has been incorporated, in this case a door (7). This figure also shows the fruit inlet window (8) and the housing of the drive shaft of the cleaning system of the juice filter (9).
FIGURE 3 shows the housing with the door closed. The door has a frame (71) and a transparent window (72).

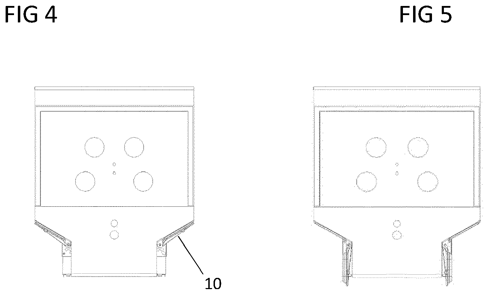

FIGURE 4 shows the housing seen from the front with the doors (10) of the waste outlet holes closed, and FIGURE 5 shows those doors open.

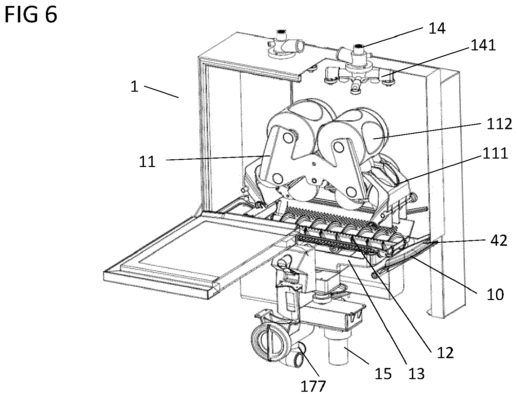

FIGURE 6 shows the casing (1) in a possible embodiment, cutaway to better see its interior. In this figure, for better compression of the housing elements, the squeezing unit (11) is shown with the squeezing drums (112) and the extractor wedges (111) arranged in a plane higher than the waste outlet holes (42), here arranged on the side walls in their inclined section and with the associated door (10) closed. The juice filter (12) with a drag system, the juice storage basin (13), the inlet pipes (14) of water and cleaning liquids and the sprinklers (141) on the squeezing unit. There is also shown a stepper motor (15) associated with the basin and the outlet pipe suitable for pumping and controlling the outlet of liquids, either juice or cleaning liquids, from that basin. A branch (177) that together with a pump that opens or closes one of the branches, preferably that of drainage to final sewerage, separates the cleaning liquids that will be recirculated or those that, where appropriate, will go to sewerage.

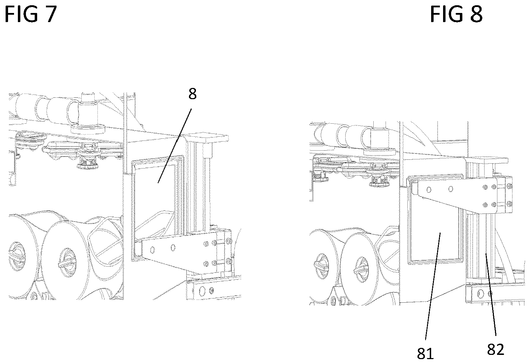

FIGURE 7 shows in detail the fruit entry window (8) shown open.
FIGURE 8 shows in detail the fruit entry window (8) in this case closed by a sliding lid (81) activated by a mechanism (82) arranged on the side of the casing.

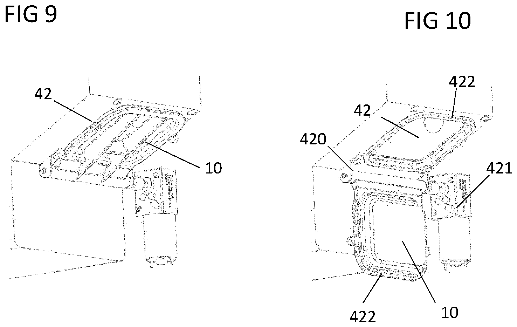

FIGURE 9 shows in detail a waste outlet hole (42), in this case in an inclined section of a side wall, and the door (10) that closes it which in this case is shown closed.
FIGURE 10 shows in detail a possible embodiment of a waste outlet hole (42) and the door (10) that closes it which, in this case, is seen open. The door (42) pivots on a lower hinge (420) and is activated by a door latching mechanism (421) arranged adjacent to the door it activates. The door has a thickness and a geometry suitable for adjusting with the geometry of the waste exit holes to seal them in a watertight manner, being able to show sealing strips (422).

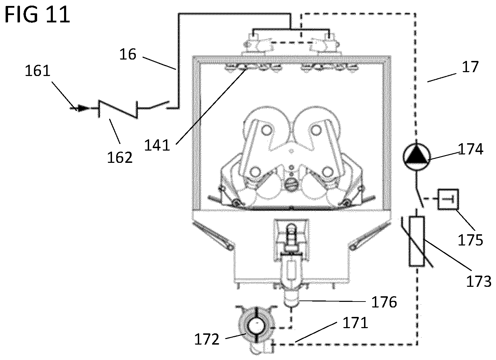

FIGURE 11 shows, schematically, an embodiment of the first sub-circuit (16) with a continuous line and the second sub-circuit (17) with a dashed line.

The first sub-circuit (16) comprises the mains water intake (161), flow regulators (162) such as an electro-valve associated with a level detector and the sprinklers (141) through which the water enters the housing. Once the level detector associated with the first sub-circuit, such as a pressure switch or a pressure gauge, detects that the water level is pre-set, the water supply is paralysed and its recirculation is started.

The second general recirculation sub-circuit (17) comprises a drain (176), optionally a filter (172), the recirculation pump (174), a flow heater (173) and a temperature controller (175) such as a thermostat.

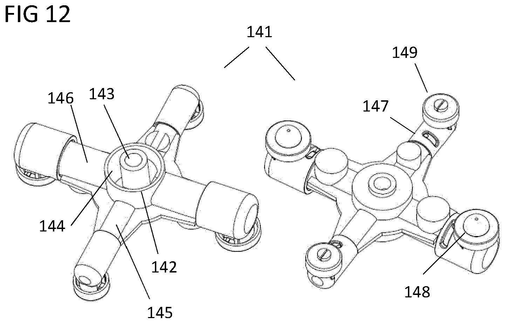

FIGURE 12 shows the sprinklers (141) from the top and bottom, the connection (142) with the first and second sub-circuits being a connection of coaxial channels with the central channel (143) being the first conduit, which is connected to the first sub-circuit and the outer channel (144), being the second conduit, connected to the second sub-circuit.

The first conduit conducts cleaning liquids to the smaller section vanes (145) and the second line to the larger section vanes (146).

The blades are mounted on an idle or loose shaft. The nozzles (148) and (149) are at the ends of the vanes, and may be fixed or adjustable, and may be mounted on adjustable hoods (147).

The nozzles of the first conduit (148) have a lower output flow rate than the nozzles of the second conduit (149).

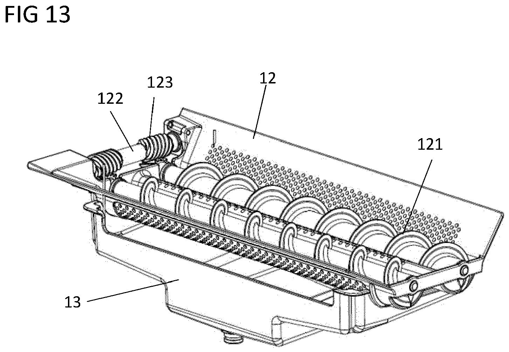

FIGURE 13 shows the juice filter (12) suitable for being arranged inside the casing on the basin (13). The filter has a double channel geometry with spindles (121) housed on each of the channels. These spindles move by means of a shaft (122) associated with the motor of the machine and present opposite movement with respect to each other by means of a gear (123).

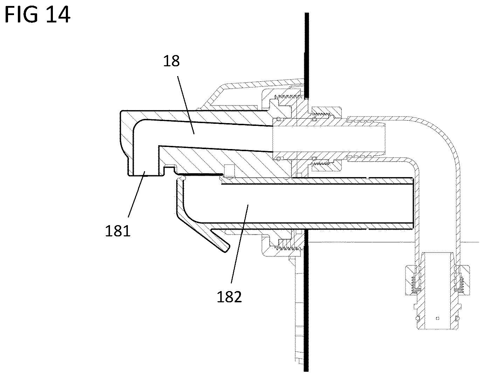

FIGURE 14 shows in section a diagram of the third sub-circuit where the outlet pipe (18) is seen, in this case with its mouth (181) free when the recirculation pipe (182) is removed. This position would be adopted by the third sub-circuit during the juicing cycle of the machine and juice service. The stepper motor that pumps the liquid from the basin is not shown, nor is the outlet pipe.

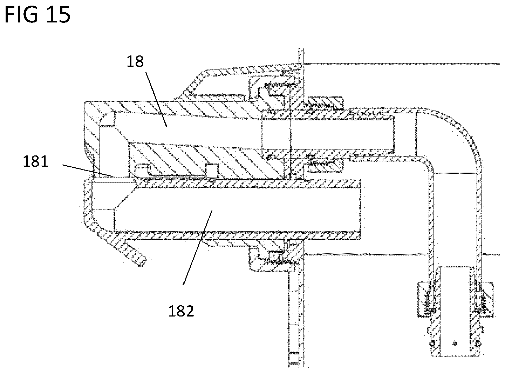

FIGURE 15 shows in section a diagram of the third sub-circuit in which the outlet pipe (18) is seen, in this case with its mouth (181) in connection with the recirculation pipe (182) as it is advanced. This position would be the one that the third sub-circuit would adopt during the washing cycle.

### DESCRIPTION OF AN EMBODIMENT

A form that is not unique or limiting to carry out the invention is shown here.

The squeezing machine with a sanitising system comprises;

A watertight housing. This housing has holes, both for entry and exit of cleaning liquids and for entry of fruit or waste outlet. The fruit inlet and waste outlet holes are associated with operable doors and a lid allowing the casing to be watertight during the sanitisation cycles but to have said holes operational during the squeezing cycles.

A squeezing unit housed inside. The squeezing unit comprises male drums, female drums, cutting blade, extractor wedges and a juice filter which in turn comprises a trawling system that drags the remains that are deposited to the sides. The filter is arranged under the squeezing unit. Under the filter a basin is arranged to receive the juice already filtered.

A sanitisation circuit comprising three sub-circuits; the first of them introducing water from a mains outlet, the second of general recirculation and heating of cleaning liquids and the third of recirculation of cleaning liquids from the tub to the casing through the outlet pipe and recirculation pipe.

In relation to the housing (1) it has a geometry of two prismatic volumes, an upper major and a lower minor with an expansion zone (6) between them. All of them are connected by a single cavity inside.

At a constructive level, it includes:
A rear wall (2) with the housings (21) for the drive shafts of the squeezing system, the blade anchors (22) and the housing of the drive shaft of the filter cleaning system (9).

An upper lid (3) with the holes for the channelling of water and cleaning liquids (31).

Side walls (4), with an inclined section (41) towards the inside of the casing where the waste outlet holes (42) are located and a fruit inlet window (8) on one of the sides in its upper part.

A front part (5), fixed closed to the expansion zone (6). This front part has a liquid outlet orifice (51) suitable for fixing an outlet pipe (18) and a recirculation orifice (52) suitable for fixing a recirculation pipe (182).

The upper area of the front part is closed by a door (7) comprising a frame (71) and a transparent area (172).

The lower part of the assembly is closed by a lower closure having a drainage hole.

This configuration generates a reservoir at the bottom of the housing suitable for containing the cleaning liquids before their recirculation.

The waste outlet holes (42) are associated with doors (10) suitable for sealing each waste hole for which, in addition to the complementary geometry between door and waste outlet hole, sealing strips (422) are arranged in the joints. These doors are associated with an engine that opens and closes them automatically coordinating with the cleaning, squeezing or stopping operations as the case may be. The closing and opening of the doors is carried out by pivoting them on hinges (420) arranged in their lower part. The motor (421) is arranged in a rear position, preferably within the main body of the machine.

The fruit entry window (8) comprises a sliding lid (81) that opens or closes it in a manner coordinated with the cleaning, squeezing or stopping operations according to the case and regulates the entry of fruits by hindering or releasing access. To this end, it is associated with a motor (82) arranged in a rear position, preferably inside the main body of the machine.

This housing is suitable for housing a squeezing unit (11) exposed to the action of the sprinklers. This squeezing unit comprises female drums (112), male drums and extraction wedges (111) suitable for removing the rind once the fruit has been squeezed, leaving it loose so that, by gravity, it falls into the waste bin arranged outside the housing.

In the vertical of the squeezing unit, downstream, the juice filter (12) is arranged which has a double channel geometry with spindles (121) housed on each of the channels. These spindles move by means of a shaft (122) associated with a motor of the machine and present opposite movement with respect to each other by means of a gear (123). The spindles drag the pulp and fruit residues towards the ends of the filter to, from there, fall into a waste bucket arranged outside the casing.

Downstream of the juice filter, in the vertical, the tray (13) is arranged, which collects the juice. The liquid contained in the basin exits it through an outlet pipe (18) pumped by a stepper motor (15).

The machine comprises a circuit suitable for sanitising the entire interior of the casing, the squeezing unit and its auxiliary elements. The circuit comprises three sub-circuits.
- The first sub-circuit (16) feeds water to the machine. To this end, it comprises a connection to a mains water outlet (161), a flow rate regulator (162) associated with a level detector to control the amount of water inside the housing and a series of sprinklers (141) to introduce the water inside the housing with the desired pressure and direction.
- The second sub-circuit comprises a drain (176), a filter (172), a pump (173), a flow heater (174), a thermostat for controlling the temperature (175) of the cleaning liquid and a series (141) of sprinklers for introducing the cleaning liquid into the housing with the desired pressure and direction.
   The sprinklers are shared by the first and second circuits although these sprinklers have a connection of coaxial channels with the central channel (143) being the first conduit input due to being connected to the first sub-circuit and the external channel (144), the connection of the second conduction due to being connected to the second sub-circuit being both independent.
   The sprinklers comprise vanes where the cleaning liquid exit nozzles are located. The first conduit conducts cleaning liquids to the smaller section vanes (145) and the second conduit to the larger section vanes(146).
   The vanes are mounted on an idle or loose shaft. Nozzles 148 and 149 are located at the end of the vanes. The orientation of the nozzles and the pressure of cleaning liquid that they expel, causes and conditions the rotation of the sprinklers. The outlet pressure of the cleaning liquid is conditioned by the section of the vanes and by the section of the outlet of the nozzles being lower in the nozzles of the first line (148) to raise the pressure of the water of the mains outlet and higher in the nozzles of the second conduit (149) since the second sub-circuit has a pump for this purpose. Preferably the nozzles, or some of them, are orientated diagonally to the plane of the vanes to cause the sprinklers to rotate and for the cleaning liquids to reach the inner part of the walls of the casing and the squeezing unit from different angles.
- The third sub-circuit aims at cleaning the interior of the pipe and draining the basin. To do this, it comprises:
   - A stepper motor (15) that takes the liquids from the basin and pumps them to an outlet pipe.
   - An outlet pipe (18), which during the squeezing cycles channels the juice coming out of the basin.
   - A movable recirculating tube (182), arranged under the outlet pipe.

During the squeezing cycles the recirculation pipe (182) is in an open, delayed position, leaving the mouth (181) of the outlet pipe free allowing the juice to exit and, during the washing cycles, it is in a closed, advanced position, and collects the cleaning liquid that exits the outlet pipe (18) and reintroduces it into the casing at the bottom.

The recirculating spout (182) preferably exhibits forward and backward motion.

In addition to the three sub-circuits, the machine comprises:
- A drainage installation partially shared by the second sub-circuit and the pipeline to the sewer with a branch (177) that serves to separate the cleaning liquids that will be recirculated from those that, where appropriate, will go to the sewer. This branch (177) associated with a pump in one of the branches is coordinated with the squeezing processes, the sanitisation process phase or machine downtime.
- Deposits and dispensers for the introduction of cleaning liquids into the flow, products such as detergent, surfactants, brightener, descalers or any other necessary or convenient in sanitisation processes.

The machine explained here has solid waste outlets (42), a juice outlet pipe (18) and a drain (176) independent of each other, achieving an environmentally efficient management of each type of waste, allowing an efficient sanitisation process, with low energy consumption as the cleaning liquid can be recirculated, and fully automated.

As for the sanitisation process, it includes the following stages and sub-processes, some of which may be contemporary:
A zero stage in which the squeezing unit and auxiliary elements move in vacuum removing from the casing all the remains that could remain from previous squeezes.

A first step of closing covers (81) and doors (10) and positioning the recirculation pipe (182) in the closed position. Verification of all the above preventing the passage to the subsequent stage until the verification is completed.

A second stage in which water is introduced into the casing. In this second step, the water is circulated through the first conduit (143) and through the blades of smaller section (145) to, together with the nozzles of the first line (148) raise the pressure of the water and that at its outlet, as the nozzles are orientated diagonally, which causes the sprinklers to rotate and rinse the walls of the casing.

Once the level detector verifies that there is enough water inside the housing, in coordination with the flow regulator, it closes the passage preventing the entry of more water, ending the second stage.

The third recirculation step in which two sub-steps take place can be simultaneous:
- The general recirculation sub-step where the water or cleaning liquids leave the housing through the drain (176) and pass through a filter (172), a selection key (177), a pump (173) and a heater (174) to re-enter the housing, hot and under pressure through the second conduit (142) and the nozzles of the second conduit (149) of the sprinklers. In this second step the detergent is incorporated into the cleaning liquid. This general recirculation sub-step has a first phase in which water is recirculated without adding detergent. During this first phase, the water rises in temperature until reaching a predetermined temperature that is ideal for the correct operation of the detergent. Once that predetermined temperature is reached, the detergent is introduced into the housing through a metering pump that connects through a channel at the base of the vanes.
- The partial recirculation sub-step wherein the liquid contained in the basin exits the outlet pipe (18) and re-enters the housing through the recirculation pipe (182) which is in the closed position. This sub-step is governed by the stepper motor (15) that pumps the liquid from the basin (13) to the outlet pipe.

A fourth emptying stage. Once the recirculation stage is complete, an emptying stage is carried out, in which the cleaning liquids evacuate through the drain and go to the sewer.

Optionally there may be a fifth rinsing and polishing step. In this fifth stage, water is again taken from the mains outlet through the first circuit..

During stages 2 or 3 or both, the squeezing unit and its auxiliary elements move. In this phase of movement, all the elements that move during the squeezing are moved in such a way that the different parts of the squeezing unit or their auxiliary elements are exposed to the sprinklers by varying their proximity or their exposure angle, avoiding the existence of shaded areas or areas excluded from the action of the cleaning liquids.

This movement can be continuous or have stops and starts in such a way that a particular part is exposed longer to the action of the cleaning liquids.

These stops may be predetermined or random or a combination of both, thereby giving the option for all parts of the squeezing unit, including the filter, to be exposed to the jets of hot and pressurised cleaning liquids.

## Claims

1. JUICE EXTRACTION MACHINE WITH SANITISATION SYSTEM, the machine being of the type that generates solid waste after the squeezing process and comprising a casing with a squeezing unit housed therein **characterised in that** the casing (1) is watertight and **in that** it comprises waste outlet holes (42) associated with practicable doors (10), a practicable fruit inlet window (8) associated with a lid (81), sprinklers (141) associated with a first sub-circuit (16) and a second sub-circuit (17), arranged above the squeezing unit wherein the casing comprises:
- A rear wall (2) with housings (21) for the drive shafts of the squeezing system.
- An upper lid (3) with holes for the channelling of cleaning liquids (31)
- Side walls (4)
- A front part (5), with a liquid outlet hole (51)
- A bottom closure with a hole suitable for drainage
- Waste outlet holes.
The bottom of the casing forms a reservoir.
The machine further comprises a sanitising circuit comprising a first water introduction sub-circuit (16), and a second sub-circuit (17) for general recirculation and heating of cleaning liquids.

2. JUICE EXTRACTION MACHINE WITH SANITISING SYSTEM according to claim 1 **characterised in that** the front part (5) further comprises a recirculation hole (52) and **in that** the sanitising circuit further comprises a third circuit for recirculating the cleaning liquids from a basin (13) comprising a stepper motor (15), an outlet tube (18) and a recirculation tube (181).

3. JUICE EXTRACTION MACHINE WITH SANITISATION SYSTEM according to claim 1 **characterised in that** the first sub-circuit comprises a water intake of (161) flow regulators (162) associated with a level detector and sprinklers (141) through which the water enters the casing.

4. JUICE EXTRACTION MACHINE WITH SANITISATION SYSTEM according to claim 1, **characterised in that** the second sub-circuit comprises a drain (176), a recirculation pump (173), a heater (174), an element for controlling the temperature (175) of the cleaning liquid and sprinklers (141) for reintroducing the water inside the casing with desired pressure and direction and optionally a filter.

5. JUICE EXTRACTION MACHINE WITH SANITISING SYSTEM according to claim 1 **characterised in that** during the squeezing operations the window (8) and the doors (10) remain open and during the sanitising operations remain closed.

6. JUICE EXTRACTION MACHINE WITH SANITISING SYSTEM according to claim 1, **characterised in that** the sprinklers (141) have a first line connected to the first sub-circuit and a second conduit connected to the second sub-circuit being one and the other independent.

7. JUICE EXTRACTION MACHINE WITH SANITISING SYSTEM according to claim 6 **characterised in that** the sprinklers comprise vanes mounted on an idle shaft and nozzles (148) and (149) at the ends of the vanes orientated diagonally with respect to the plane of the vanes.

8. JUICE EXTRACTION MACHINE WITH SANITISING SYSTEM according to claim 7, **characterised in that** the first conduit conducts the cleaning liquids to the vanes of the smaller section (145) and the second conduit to the vanes of the larger section (146).

9. JUICE EXTRACTION MACHINE WITH SANITISING SYSTEM according to claim 1 **characterised in that** the front wall (5) is fixed up to the height of an expansion zone (6) and has a door (7) at its upper part.

10. JUICE EXTRACTION MACHINE WITH SANITISING SYSTEM according to claim 1, **characterised in that** the squeezing unit comprises drums (112) and extractor wedges (111) and as auxiliary elements a juice filter (12) placed downstream of the squeezing unit, said juice filter having a drive system.

11. JUICE EXTRACTION MACHINE WITH SANITISING SYSTEM according to claim 10 **characterized in that** the juice filter is in the form of a double channel with a spindle (121) housed in each of the channels, the spindles being mobile by the action of a shaft (122) associated with a motor and of opposite movement by the action of a gear (123).

12. JUICE EXTRACTION MACHINE WITH SANITISING SYSTEM according to claim 1, **characterised in that** the waste outlet holes (42) are located in the side walls.

13. METHOD FOR SANITISING A JUICE EXTRACTION MACHINE **characterised in that** it comprises
A zero solid waste removal step during which the squeezing unit and its auxiliary elements move in a vacuum.
A first step of closing the covers (81) and doors (10) and positioning the recirculation tube (182) in the closed position and verifying said operations.
A second step of introducing water into the housing by the first conduit (143) and by the vane of the smaller section (145) so as, together with the nozzles of the first conduit (148) to raise the pressure of the water and that upon its exit by the nozzles orientated diagonally causes the rotation of the sprinklers and the rinsing of the walls of the housing.
The third stage of general recirculation in which the water or cleaning liquids leave the housing through the drain (176) and pass through a filter (172), a selection key (177), a pump (173) and a heater (174) to re-enter the housing, hot and under pressure through the second conduit (142) and the nozzles of the second conduit (149) of the sprinklers.
This third step comprises a first phase in which the water without detergent is recirculated until it reaches a predetermined temperature. Once the predetermined temperature is reached, the detergent is incorporated.
During stages 2 or 3 or during both the squeezing unit and its auxiliary devices move all the elements that move during the squeezing. At this stage the different parts of the squeezing unit or their auxiliary devices are exposed to the effect of the sprinklers with variations in their angle of attack and pressure.

14. METHOD FOR SANITISING A JUICE EXTRACTION MACHINE according to claim 13 **characterised in that** the third stage further comprises a partial recirculation sub-stage where the liquid contained in the bowl, is pumped by a stepper motor (15), exits through the outlet pipe (18) and re-enters the casing through the recirculation pipe (182) which is in the closed position.

15. METHOD FOR SANITISING A JUICE EXTRACTION MACHINE according to claim 13 **characterised in that** the movement of the elements of the squeezing unit is continuous.

16. METHOD FOR SANITISING A JUICE EXTRACTION MACHINE according TO claim 13 **characterised in that** the movement of the elements of the squeezing unit has stops and starts in such a way that a specific part is exposed for more time to the action of the cleaning liquids.

17. METHOD FOR SANITISING A JUICE EXTRACTION MACHINE according to claim 13 **characterised in that** the stops and starts are predetermined.

18. METHOD FOR SANITISING A JUICE EXTRACTION MACHINE according to claim 13 **characterised in that** the stops and starts are random.

## Amended claims

### Amended claims under Art. 19.1 PCT

1. JUICE EXTRACTION MACHINE WITH SANITISATION SYSTEM, the machine being of the type that generates solid waste after the squeezing process and comprising a casing with a squeezing unit housed therein **characterised in that** the casing (1) is watertight and **in that** it comprises waste outlet holes (42) associated with practicable doors (10), a practicable fruit inlet window (8) associated with a lid (81), sprinklers (141) associated with a first sub-circuit (16) and a second sub-circuit (17), arranged above the squeezing unit wherein the casing comprises:
- A rear wall (2) with housings (21) for the drive shafts of the squeezing system.
- An upper lid (3) with holes for the channelling of cleaning liquids (31)
- Side walls (4)
- A front part (5), with a liquid outlet hole (51)
- A bottom closure with a hole suitable for drainage
- Waste outlet holes.
The bottom of the casing forms a reservoir.
The machine further comprises a sanitising circuit where the sprinklers (141) comprise a first conduit connected to the first water introduction sub-circuit (16), and a second conduit connected to the second sub-circuit (17) for general recirculation and heating of cleaning liquids, the first and second conduits being coaxial and independent of each other.

2. JUICE EXTRACTING MACHINE WITH SANITISING SYSTEM according to claim 1 **characterised in that** the front part (5) further comprises a recirculation hole (52) and **in that** the sanitising circuit further comprises a third circuit for recirculating the cleaning liquids from a tub (13) comprising a stepper motor (15), an outlet tube (18) and a recirculation tube (181).

3. JUICE EXTRACTION MACHINE WITH SANITISATION SYSTEM according to claim 1 **characterised in that** the first sub-circuit comprises a water intake of (161) flow regulators (162) associated with a level detector and sprinklers (141) through which the water enters the casing.

4. JUICE EXTRACTION MACHINE WITH SANITISING SYSTEM according to claim 1, **characterised in that** the second sub-circuit comprises a drain (176), a recirculation pump (173), a heater (174), an element for controlling the temperature (175) of the cleaning liquid and sprinklers (141) for reintroducing the water inside the casing with desired pressure and direction and optionally a filter.

5. JUICE EXTRACTION MACHINE WITH SANITISING SYSTEM according to claim 1, **characterised in that** the sprinklers (141) comprise vanes mounted on an idle shaft and nozzles (148) and (149) at the ends of the vanes orientated diagonally with respect to the plane of the vanes.

6. JUICE EXTRACTION MACHINE WITH SANITISING SYSTEM according to claim 1, **characterised in that** the first conduit conducts the cleaning liquids to the vanes of the smaller section (145) and the second conduit to the vanes of the larger section (146).

7. JUICE EXTRACTION MACHINE WITH SANITISING SYSTEM according to claim 1, **characterised in that** the front wall (5) is fixed up to the height of an expansion zone (6) and has a door (7) in its upper part.

8. JUICE EXTRACTION MACHINE WITH SANITISING SYSTEM according to claim 1, **characterised in that** the squeezing unit comprises drums (112) and extractor wedges (111) and as auxiliary elements a juice filter (12) placed downstream of the squeezing unit, said juice filter having a drive system.

9. JUICE EXTRACTION MACHINE WITH SANITISING SYSTEM according to claim 10 **characterized in that** the juice filter is in the form of a double channel with a spindle (121) housed in each of the channels, the spindles being mobile by the action of a shaft (122) associated with a motor and of opposite movement by the action of a gear (123).

10. JUICE EXTRACTION MACHINE WITH SANITISING SYSTEM according to claim 1, **characterised in that** the waste outlet holes (42) are located in the side walls.

11. METHOD FOR SANITSING A JUICE EXTRACTION MACHINE **characterised in that** it comprises
A zero stage of removal of solid waste during which the squeezing unit and its auxiliary elements go into motion to evacuate all the remains of pulp or fruit that may remain.
A first step of closing the covers (81) and doors (10) and positioning the recirculation tube (182) in the closed position and verifying said operations.
A second step of introducing water into the housing by the first conduit (143) and by the vane of the smaller section (145) so as, together with the nozzles of the first conduit (148) to raise the pressure of the water and that upon its exit by the nozzles orientated diagonally causes the rotation of the sprinklers and the rinsing of the walls of the housing.
The third stage of general recirculation in which the water or cleaning liquids leave the housing through the drain (176) and pass through a filter (172), a selection key (177), a pump (173) and a heater (174) to re-enter the housing, hot and under pressure through the second conduit (142) and the nozzles of the second conduit (149) of the sprinklers.
This third step comprises a first phase in which the water without detergent is recirculated until it reaches a predetermined temperature. Once the predetermined temperature is reached, the detergent is incorporated.
During stages 2 or 3 or during both the squeezing unit and its auxiliary devices move all the elements that move during the squeezing. At this stage the different parts of the squeezing unit or their auxiliary devices are exposed to the effect of the sprinklers with variations in their angle of attack and pressure.

12. METHOD FOR SANITISING A JUICE EXTRACTION MACHINE according to claim 11 **characterised in that** the third step further comprises a partial recirculation sub-step wherein the liquid contained in the bowl, is pumped by a stepper motor (15), exits through the outlet tube (18) and re-enters the casing through the recirculation tube (182) which is in closed position.

13. METHOD FOR SANITISING A JUICE EXTRACTION MACHINE according to claim 11 **characterised in that** the movement of the elements of the squeezing unit is continuous.

14. METHOD FOR SANITISING A JUICE EXTRACTION MACHINE according to claim 11 **characterised in that** the movement of the elements of the squeezing unit has stops and starts in such a way that a specific part is exposed for more time to the action of the cleaning liquids.

15. METHOD FOR SANITISING A JUICE EXTRACTION MACHINE according to claim 11 **characterised in that** the stops and starts are predetermined.

16. METHOD FOR SANITISING A JUICE EXTRACTION MACHINE according to claim 11 **characterised in that** the stops and starts are random.

17. METHOD FOR SANITISING OF A JUICE EXTRACTION MACHINE according to claim 11 **characterised in that** during the squeezing operations the window (8) and the doors (10) remain open and during the sanitising operations remain closed.

Statement under Art. 19.1 PCT
In accordance with the provisions of Art 19.1 PCT, this DECLARATION is provided together with the modifications to the CLAIMS,
**CLAIM** 1 is modified to include the former CLAIM 6. The IBI has considered that said claim 6, which specifies an embodiment of the sprinklers, has novelty and an inventive step.
   The inclusion of the former claim 6 in claim 1 does not require modifying the description or the figures as it is an embodiment already provided for in the patent application as filed. It is found in the description (page 8 line 27) and in figures 12 references 143 and 144.
   As a consequence of the foregoing, CLAIM 6 is integrated into claim 1 and is deleted as a dependent claim.
**CLAIM** 5, as suggested by the IBI, becomes a procedural claim that adds the set of claims with the number 17. Claim 5, which becomes 17, is therefore deleted.
   This change does not alter the scope of protection of the patent since it is a mere relocation of a claim and an existing one.
   After the elimination of claims 5 and 6, the others are renumbered in the manner explained in the ACCOMPANYING LETTER and the dependencies are corrected to adapt them to the new renumbering, without this altering the content of the patent application or the description or the drawings.
